(19) Europäisches Patentamt
European Patent Office
Office européen des brevets

(11) EP 1 661 927 A1

(12) **EUROPEAN PATENT APPLICATION**
published in accordance with Art. 158(3) EPC

(43) Date of publication:
**31.05.2006 Bulletin 2006/22**

(21) Application number: **04771705.3**

(22) Date of filing: **10.08.2004**

(51) Int Cl.:
***C08F 290/04*** *(1995.01)* ***C08F 4/70*** *(1974.07)*

(86) International application number:
**PCT/JP2004/011744**

(87) International publication number:
**WO 2005/023888 (17.03.2005 Gazette 2005/11)**

(84) Designated Contracting States:
**AT BE BG CH CY CZ DE DK EE ES FI FR GB GR HU IE IT LI LU MC NL PL PT RO SE SI SK TR**

(30) Priority: **05.09.2003 JP 2003313860**

(71) Applicant: **KANEKA CORPORATION**
**Osaka-shi, Osaka 530-8288 (JP)**

(72) Inventors:
- **SAKAMOTO, Harumi**
  **5660073 (JP)**
- **FUKUI, Yoshifumi**
  **5600085 (JP)**

(74) Representative: **Vossius & Partner**
**Siebertstrasse 4**
**81675 München (DE)**

# (54) POLYOLEFIN GRAFT COPOLYMER, COMPOSITION AND METHOD FOR PRODUCING SAME

(57) The present invention provides a polyolefin graft copolymer which is produced by graft copolymerization of an olefin monomer and a (meth)acrylic macromonomer and which has good powder characteristics, a polyolefin graft copolymer composition, and a method for producing such a polyolefin graft copolymer. The invention also provides a composition containing the copolymer and a method for producing such a composition. In the presence of a late transition metal complex coordination polymerization catalyst, an olefin monomer and a (meth) acrylic macromonomer having a glass transition temperature of 30°C or higher are graft-copolymerized.

EP 1 661 927 A1

## Description

### Technical Field

The present invention relates to a polyolefin graft copolymer produced, in the presence of a coordination polymerization catalyst, by copolymerizing an olefin monomer and a (meth)acrylic macromonomer prepared by emulsion polymerization, and a method for producing the same. The invention also relates to a composition containing the polyolefin graft copolymer.

### Background Art

As the graft copolymer produced using emulsion polymerization, core-shell polymers are well known. Examples thereof include MBS resins produced by graft copolymerization of methyl methacrylate and styrene to butadiene rubber polymers, and acrylic rubber polymers having excellent impact resistance to which methyl methacrylate or the like is graft-copolymerized. These are used for improving impact resistance of thermoplastic resins, such as polyvinyl chloride. However, since the core-shell polymers generally have high polarity, the dispersibility of the core-shell polymers in polyolefin resins is low. A technique for dispersing highly polar fine particles, such as those of core-shell polymers, in polyolefin resins has been desired for a long time. However, it has been difficult, for example, to copolymerize an olefin monomer having low polarity to improve dispersibility.
On the other hand, polyolefin resins are commercially produced by coordination polymerization. Ziegler-Natta catalysts and metallocene catalysts are well known as coordination polymerization catalysts for olefins. However, when such early transition metal-based coordination polymerization catalysts are used, polar compounds react or coordinate with complexes or catalytic active species, resulting in loss of the activities or decomposition thereof. Therefore, it has been difficult to impart functionality by copolymerizing a olefin with a polar functional group-containing monomer and to conduct olefin polymerization in an emulsion polymerization system.
Late transition metal complex coordination polymerization catalysts are known as coordination polymerization catalysts having high tolerance to polar compounds. As exemplified in various articles (Chemical Review, 2000, Vol. 100, p. 1169; Journal of Synthetic Organic Chemistry, Japan, 2000, Vol. 58, p. 293; and Angewandte Chemie International Edition, 2002, Vol. 41, p. 544), when such catalysts are used, olefins can be polymerized without losing the activities even in the presence of a polar solvent, such as tetrahydrofuran, an ether, acetone, ethyl acetate, or water, and copolymers with polar vinyl monomers, such as alkyl (meth)acrylates, can also be obtained. However, even when these catalysts are used, the amount of the polar monomer copolymerizable with a olefin is limited. Therefore, a technique for producing a polyolefin copolymer containing a large amount of polar monomer has been desired for a long time.
In order to overcome the problems described above, a copolymer produced by copolymerization of a macromonomer and an olefin monomer has been disclosed (Japanese Unexamined Patent Application Publication No. 2003-147032). In this technique, as an example of the macromonomer, a (meth)acrylic macromonomer prepared by solution polymerization or emulsion polymerization can be used. It has been shown that a copolymer of poly(butyl acrylate) and polyethylene, after being hydrolyzed, imparts polarity to a polyolefin resin to improve surface wettability and decrease the water contact angle. However, with respect to the copolymer produced by copolymerizing poly(butyl acrylate) and polyethylene using this technique, powder characteristics are poor, which leads to poor handleability, such as occurrence of blocking.

### Disclosure of Invention

Accordingly, it is an object of the present invention to provide a polyolefin graft copolymer which is produced by graft copolymerization of an olefin monomer and a (meth)acrylic macromonomer prepared by emulsion polymerization and which has good powder characteristics, a composition containing the polyolefin graft copolymer, and methods for producing these products.
In order to overcome the problems described above, as a result of intensive research, the present inventors have found that when the glass transition temperature of the (meth)acrylic macromonomer used is sufficiently high, the resulting copolymer has good handleability, and also have found that when the copolymer is added to thermoplastic resins, such as polyolefin, it is possible to obtain the effect of improving not only surface wettability but also oil resistance and abrasion resistance. Thus, the present invention has been completed.
That is, the present invention relates to a polyolefin graft copolymer produced, in the presence of a coordination polymerization catalyst, by copolymerizing an olefin monomer and a (meth)acrylic macromonomer which has a glass transition temperature of 30°C or higher and which is prepared by emulsion polymerization.
A preferred embodiment relates to the polyolefin graft copolymer, wherein the coordination polymerization catalyst is a complex containing a ligand having two imine nitrogen atoms and a late transition metal selected from

Groups 8 to 10 in the periodic table.

A preferred embodiment relates to the polyolefin graft copolymer, wherein the coordination polymerization catalyst is a complex containing an α-diimine ligand and a late transition metal selected from Group 10 in the periodic table.

A preferred embodiment relates to the polyolefin graft copolymer, wherein the coordination polymerization catalyst after reaction with a co-catalyst is an active species represented by general formula (1) or (2):

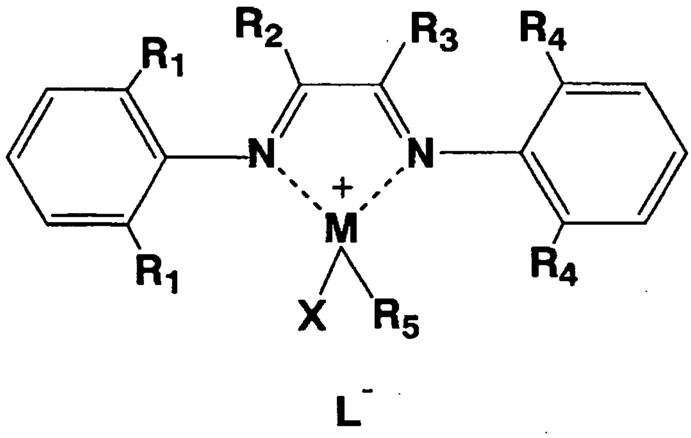

(1)

(wherein M represents palladium or nickel; $R_1$ and $R_4$ each independently represent a hydrocarbon group having 1 to 4 carbon atoms; $R_2$ and $R_3$ each independently represent a hydrogen atom or a methyl group; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and L- represents an anion);

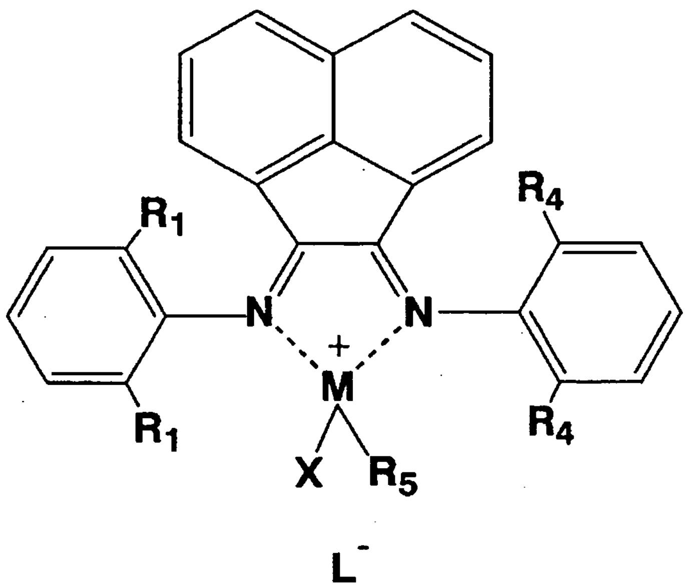

(2)

(wherein M represents palladium or nickel; $R_1$ and $R_4$ each independently represent a hydrocarbon group having 1 to 4 carbon atoms; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and L- represents an anion).

A preferred embodiment relates to the polyolefin graft copolymer, wherein the (meth)acrylic macromonomer prepared by emulsion polymerization is a poly(meth)acrylic macromonomer prepared by emulsion polymerization of a

(meth)acrylic monomer (A) and a monomer (B) having a functional group copolymerizable with the olefin monomer.

A preferred embodiment relates to the polyolefin graft copolymer, wherein the component (A) is at least one monomer selected from the group consisting of methyl methacrylate, glycidyl methacrylate, 2-hydroxyethyl methacrylate, tert-butyl acrylate, and tert-butyl methacrylate, and the component (B) is allyl methacrylate and/or ethylene glycol dicyclopentenyl ether methacrylate.

A preferred embodiment relates to the polyolefin graft copolymer, wherein the olefin monomer is an α-olefin.

A preferred embodiment relates to the polyolefin graft copolymer, wherein the olefin monomer is at least one monomer selected from the group consisting of ethylene, propylene, 1-butene, 1-hexene, and 1-octene.

Furthermore, the present invention relates to a method for producing the polyolefin graft copolymer.

Furthermore, the present invention relates to an aqueous liquid composition containing the polyolefin graft copolymer.

Furthermore, the present invention relates to a thermoplastic resin composition containing the polyolefin graft copolymer.

A preferred embodiment relates to the thermoplastic resin composition, wherein the composition contains a polyolefin resin as a component.

Since the polyolefin graft copolymer according to the present invention has excellent powder characteristics, good handleability is exhibited. Furthermore, the graft copolymer resin exhibits good dispersibility in thermoplastic resins, in particular, polyolefins, and can be used as an excellent modifier. The thermoplastic resin composition containing the copolymer is excellent in oil resistance, abrasion resistance, and surface wettability.

Best Mode for Carrying Out the Invention

The present invention will be described in detail below. The present invention relates to a polyolefin graft copolymer produced, in the presence of a late transition metal complex coordination polymerization catalyst, by graft-copolymerizing an olefin monomer and a (meth)acrylic macromonomer which has a glass transition temperature of 30°C or higher and which is prepared by emulsion polymerization, and a method for producing the same.

The (meth)acrylic macromonomer used in the present invention is a macromonomer containing a (meth)acrylic monomer as a main component. The main chain skeleton of the macromonomer may be liner or branched, or may have a three-dimensional network structure by crosslinking. Preferably, the macromonomer is a (meth)acrylic macromonomer having a three-dimensional network structure by crosslinking. The glass transition temperature of the (meth)acrylic macromonomer must be 30°C or higher. From the standpoint of particularly excellent powder characteristics, the glass transition temperature is preferably 40°C to 250°C, and more preferably 50°C to 200°C. If the glass transition temperature is excessively low, the powder characteristics of the polyolefin graft copolymer produced by copolymerization of the olefin monomer are degraded, and the advantageous effect of the present invention cannot be obtained. If the glass transition temperature is excessively high, there may be a difficulty in producing a composition using the copolymer and a thermoplastic resin, such as a polyolefin. With respect to the glass transition temperature (Tg) of a polymer and the measuring method thereof, in the case of a homopolymer, the Tg can be obtained from the data in Polymer Handbook Fourth Edition (by John Wiley & Sons), In the case of a copolymer, the Tg can be calculated, using the data, according to the Fox equation:

$$Tg^{-1} = w_1Tg_1^{-1} + w_2Tg_2^{-1}$$

where $Tg_1$ and $Tg_2$ are the glass transition temperatures of the individual components, and $w_1$ and $w_2$ are the weight fraction of the individual components.

Preferably, the (meth)acrylic macromonomer of the present invention is composed of a (meth)acrylic monomer (A) and a monomer (B) having a group copolymerizable with the olefin monomer, and as necessary, a monomer (C) radically copolymerizable with the component (A) and/or the component (B) may be copolymerized.

The component (A) is a component that constitutes the main skeleton of the (meth)acrylic macromonomer. There are many known (meth)acrylic monomers, and selection may be made without limitations according to required functions. The use of a (meth)acrylic monomer which forms a polymer having a glass transition temperature of 30°C or higher when polymerized alone is preferable in view of improvement in handleability. Specific examples of the component (A) include, but are not limited to, alkyl acrylates, such as tert-butyl acrylate, hexadecyl acrylate, and phenyl acrylate; alkyl methacrylates, such as methyl methacrylate, ethyl methacrylate, benzyl methacrylate, glycidyl methacrylate, and 2-hydroxyethyl methacrylate; (meth)acrylic acids, such as acrylic acid and methacrylic acid; acid anhydrides thereof; and metal salts thereof. Methyl acrylate, ethyl acrylate, propyl acrylate, n-butyl acrylate, 2-ethylhexyl acrylate, 2-ethylhexyl methacrylate, or lauryl methacrylate, which forms a polymer having a glass transition temperature of lower than 30°C

when polymerized alone, can also be used in copolymerization with another component (A), the component (B), or the component (C) if the amount used is controlled so that a macromonomer having a glass transition temperature of 30°C or higher can be produced. These compounds (A) may be used alone or in combination of two or more. Among these, in view of availability of the resulting macromonomer and economics, alkyl (meth)acrylates containing an alkyl group having 1 to 18 carbon atoms are preferable, and tert-butyl acrylate, methyl methacrylate, tert-butyl methacrylate, glycidyl methacrylate, and 2-hydroxyethyl methacrylate are particularly preferable.

The component (B) is a component for copolymerizing with the component (A) and, depending on the case, the component (C) through a radical-polymerizable unsaturated group of the component (B) to produce a copolymer, resulting in the introduction of a group copolymerizable with the olefin monomer into a side chain or a terminal of the copolymer, thus enabling graft copolymerization of the copolymer and the olefin monomer. The group copolymerizable with the olefin monomer may be any functional group without limitations and may be located anywhere, such as inside the monomer molecule or a terminal. In view of high reactivity of coordination polymerization, preferred are an allyl terminal ($\alpha$-olefin structure), a cyclic olefin terminal, a styryl terminal, and a (meth)acryl terminal, and particularly preferred are a (meth)acryl terminal, an allyl terminal, and a dicyclopentenyl terminal. When the group copolymerizable with the olefin monomer is a group having both radical polymerizability and coordination polymerizability, the radical-polymerizable unsaturated group of the component (B) and the group copolymerizable with the olefin monomer of the component (B) may be the same or different. When the two groups are the same, the component (B) contains two or more radical-polymerizable unsaturated groups (which are also groups copolymerizable with the olefin monomer) per molecule. However, during the synthesis of the (meth)acrylic macromonomer, the reaction is terminated when only a part of the radical-polymerizable unsaturated groups is subjected to radical polymerization, and thus the reaction can be controlled such that unreacted radical-polymerizable unsaturated groups (which are also groups copolymerizable with the olefin monomer) remain in the resulting (meth)acrylic macromonomer.

Typical examples of the component (B) include, but are not limited to, allyl methacrylate, allyl acrylate, diallyl phthalate, triallyl cyanurate, triallyl isocyanurate, ethylene glycol diacrylate, and ethylene glycol dicyclopentenyl ether methacrylate. These compounds (B) may be used alone or in combination of two or more. Among these, in view of low cost and high grafting efficiency, allyl methacrylate and ethylene glycol dicyclopentenyl ether methacrylate are preferable.

The component (C) is a component for adjusting various physical properties, such as elastic modulus, glass transition temperature, and refractive index, of the (meth)acrylic macromonomer. As the component (C), any monomer that is copolymerizable with the component (A) and the component (B) can be used without limitations. Such monomers may be used alone or in combination of two or more. Specific examples of the component (C) include, but are not limited to, styrene, $\alpha$-methylstyrene, 1-vinylnaphthalene, 2-vinylnaphthalene, 1,3-butadiene, isoprene, chloroprene, acrylonitrile, methacrylonitrile, vinyl acetate, and vinyl ethyl ether. However, with respect to styrene compounds represented by styrene, $\alpha$-methylstyrene, and the like, conjugated dienes represented by 1,3-butadiene and the like, nitrile compounds represented by methacrylonitrile, acrylonitrile, and the like, and vinyl ether compounds represented by vinyl acetate, vinyl ethyl ether, and the like, if the amounts of remaining monomers are large, coordination polymerization may be inhibited. Therefore, when these compounds are used, it is necessary to be careful not to allow the compounds to remain.

Each of the components may be used in any amount to an extent that the resulting macromonomer has a glass transition temperature of 30°C or higher. The component (A) is used preferably in an amount of 50% to 99.99% by weight, and more preferably 60% to 99.9% by weight. An excessively small amount may decrease the effect of improving physical properties representing polarity or physical properties exhibited as a result of polarity, such as low contact angle, high surface tension, wettability, adhesiveness, paintability, dyeability, high dielectric constant, and high-frequency sealing properties, these physical properties being expected from features of the (meth)acrylic polymer when the resulting polyolefin graft copolymer is added to a polyolefin. The component (B) is used preferably in an amount of 0.01% to 20% by weight, and more preferably 0.1% to 10% by weight. An excessively small amount causes insufficient grafting with the olefin monomer. An excessively large amount is economically disadvantageous because the compound usable as the component (B) is generally expensive. The component (C) is used preferably in an amount of 0% to 49.99% by weight, and more preferably 0% to 20% by weight. An excessively large amount may decrease the effect of improving physical properties expected from features of the (meth)acrylic polymer when the resulting polyolefin graft copolymer is added to a polyolefin. Note that the total of the compound (A), the compound (B), and the compound (C) is 100% by weight. The (meth)acrylic macromonomer used in the present invention is preferably a (meth)acrylic macromonomer produced by radical polymerization using an ordinary emulsion polymerization technique.

In the emulsion polymerization, the order and method of feeding the individual components are not particularly limited. All the starting materials may be fed at one time. Alternatively, after part of the starting materials is fed, the remaining portion may be added continuously or intermittently. A method in which any one of the component (A), the component (B), and the component (C), or a mixture of these is emulsified with an emulsifier and water in advance, and then the emulsion is added; a method in which an emulsifier, an aqueous solution of an emulsifier, or the like is added continuously or in portions separately from any one of the component (A), the component (B), and the component (C) or a mixture of these; and other methods may also be employed.

The amount of water used in the emulsion polymerization is not particularly limited as long as the amount required for emulsifying the component (A), the component (B), and the component (C) is satisfied. Usually, water is used in an amount of 1 to 20 times the total weight of the component (A), the component (B), and the component (C). If the amount of water used is excessively small, the ratio of the hydrophobic component (A), component (B), and component (C) is excessively high. Consequently, the phase of the emulsion is not changed from the water-in-oil type to the oil-in-water type and thus water does not easily become a continuous layer. If the amount of water used is excessively large, stability is decreased and tank efficiency is also decreased.

Any known emulsifier can be used in the emulsion polymerization. Any one of anionic, cationic, and nonionic emulsifiers can be used without particular limitations. In view of good emulsifying ability, anionic emulsifiers, such as alkali metal salts of an alkylbenzene sulfonic acid, alkali metal salts of an alkylsulfuric acid, and alkali metal salts of an alkylsulfosuccinic acid, are preferred. The amount of the emulsifier used is not particularly limited and may be appropriately adjusted according to the average particle size of the desired (meth)acrylic macromonomer or the like.

Additionally, the average particle size of the (meth)acrylic macromonomer can be controlled by an ordinary emulsion polymerization technique, for example, increasing or decreasing of the amount of emulsifier used. From the standpoint that a good dispersion state is exhibited when blended with a thermoplastic resin, the average particle size of the (meth)acrylic macromonomer is preferably in a range of 20 to 1,000 nm, and more preferably 30 to 500 nm.

The polymerization initiator used in the emulsion polymerization is not particularly limited and any known initiator can be used. Examples of the initiator include persulfates, such as potassium persulfate and ammonium persulfate; alkyl hydroperoxides, such as tert-butyl hydroperoxide and cumene hydroperoxide; diacyl peroxides, such as benzoyl peroxide; dialkyl peroxides, such as di-tert-butyl peroxide and tert-butyl peroxylaurate; and azo compounds, such as 2,2'-azobisisobutyronitrile and 2,2'-azobis-2,4-dimethylvaleronitrile. In addition to the use in a thermal decomposition method, these initiators can be used as a redox initiator. In a redox initiator, generally, an initiator is used together with an activator (a metal salt or a metal complex), a chelating agent, and a reducing agent.

Examples of the combination of activator/chelating agent/reducing agent which can be used together with the initiator include, but are not limited to, ferrous sulfate/glucose/sodium pyrophosphate, ferrous sulfate/dextrose/sodium pyrophosphate, ferrous sulfate/disodium ethylenediaminetetraacetate/sodium formaldehyde sulfoxylate, ferrous sulfate/citric acid/sodium formaldehyde sulfoxylate, and copper sulfate/citric acid/sodium formaldehyde sulfoxylate. The initiator is used preferably in an amount of 0.005 to 2 parts by weight, and more preferably 0.01 to 1 part by weight, relative to 100 parts by weight of a monomer. If the amount is excessively small, the polymerization rate is excessively low, resulting in low production efficiency. If the amount is excessively large, generation of polymerization heat increases, which may result in difficulty in controlling the reaction.

A chain transfer agent may be used in the emulsion polymerization according to need. The chain transfer agent is not particularly limited and any known chain transfer agent can be used. Specific examples thereof include tert-dodecylmercaptan, n-dodecylmercaptan, n-octylmercaptan, and n-hexylmercaptan.

The reaction temperature during the emulsion polymerization is not particularly limited, but is preferably 0°C to 100°C, and more preferably 30°C to 95°C, in view of ease of controlling the reaction temperature.

The (meth)acrylic macromonomer of the present invention may be composed of a single (meth)acrylic macromonomer only or may be composite particles of one or more macromonomers or a latex blend.

The catalyst for producing the polyolefin graft copolymer of the present invention will now be described. As the catalyst for producing the polyolefin graft copolymer, any coordination polymerization catalyst that has olefin polymerization activity in the presence of water and a polar compound can be used without particular limitations. Preferred examples thereof include a catalyst described in Japanese Unexamined Patent Application Publication No. 2003-147032, although not limited thereto. In view of good reactivity, after reaction with a co-catalyst, an active species represented by general formula (1) or (2) below is preferably used.

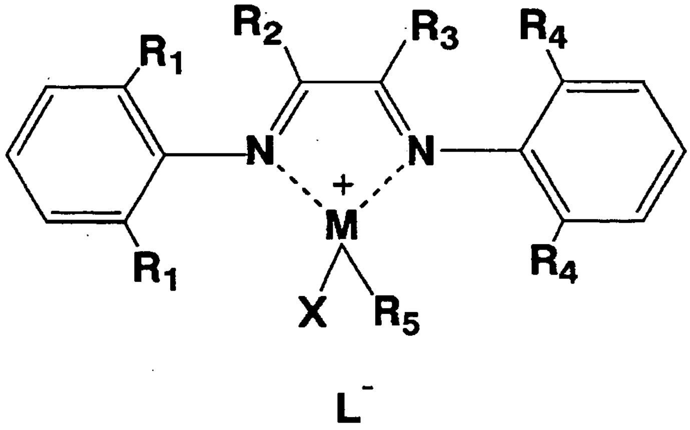

(1)

(In the formula, M represents palladium or nickel; $R_1$ and $R_4$ each independently represent a hydrocarbon group having 1 to 4 carbon atoms; $R_2$ and $R_3$ each independently represent a hydrogen atom or a methyl group; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and L- represents an anion.)

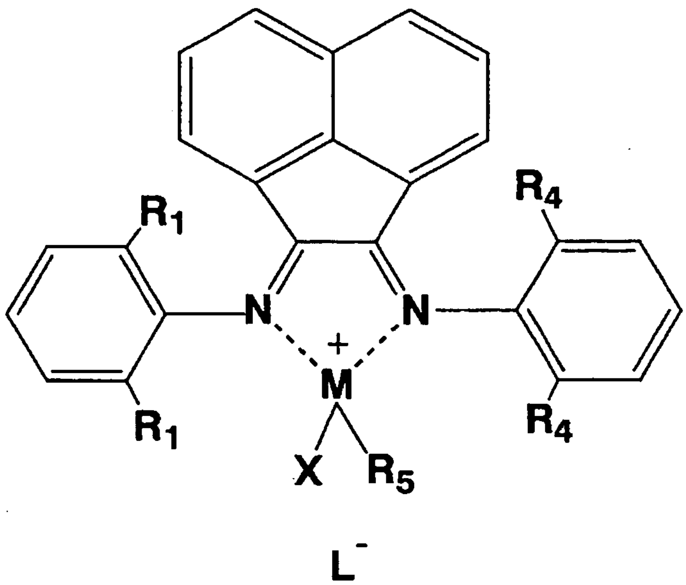

(2)

(In the formula, M represents palladium or nickel; $R_1$ and $R_4$ each independently represent a hydrocarbon group having 1 to 4 carbon atoms; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and $L^-$ represents an anion.)

Examples of the molecule represented by X capable of coordinating to M include polar compounds such as diethyl ether, acetone, methyl ethyl ketone, acetaldehyde, acetic acid, ethyl acetate, water, ethanol, acetonitrile, tetrahydrofuran, dimethylformamide, dimethyl sulfoxide, and propylene carbonate. X may not be present. When $R_5$ has a heteroatom, in particular, a carbonyl oxygen of an ester bond or the like, the carbonyl oxygen may coordinate as X. It is also known that, in the polymerization with an olefin, the olefin coordinates.

The counter anion represented by $L^-$, which is generated together with the cation ($M^+$) by reaction of a catalyst containing an $\alpha$-diimine ligand and a transition metal with a co-catalyst, may be any anion that can form a non-coordinating ion pair in solvents.

$\alpha$-Diimine ligands in which each of the imine nitrogen atoms is bonded to an aromatic group, namely, compounds

represented by $ArN=C(R_2)C(R_3)=NAr$ are preferred because these compounds can be readily synthesized and have high activity. Each of $R_2$ and $R_3$ is preferably a hydrocarbon group. In particular, compounds wherein each of $R_2$ and $R_3$ is a hydrogen atom or a methyl group or $R_2$ and $R_3$ form an acenaphthene skeleton represented by general formula (2) are preferred because these compounds can be readily synthesized and have high activity. Furthermore, α-diimine ligands in which each of the imine nitrogen atoms is bonded to a substituted aromatic group are preferably used because the use of such compounds is effective in terms of the steric factor and the molecular weight of the polymer tends to increase. Consequently, Ar is preferably an aromatic group having a substituent, for example, 2,6-dimethylphenyl or 2,6-diisopropylphenyl.

The auxiliary ligand ($R_5$) in the active species obtained from the late transition metal complex of the present invention is preferably a hydrocarbon group, a halogen group, or a hydrogen group. The reason for this is as follows: A cation ($Q^+$) of a co-catalyst, which will be described below, abstracts a halogen or the like from a metal-halogen bond, a metal-hydrogen bond, or a hydrogen-carbon bond of a catalyst to produce a salt. On the other hand, a cation ($M^+$), i.e., an active species, having a metal-carbon bond, a metal-halogen bond, or a metal-hydrogen bond is produced from the catalyst, and the cation ($M^+$) must form a non-coordinating ion pair with the anion (L-) of the co-catalyst. Specific examples of $R_5$ include a methyl group, a chloro group, a bromo group, and a hydrogen group. A methyl group or a chloro group is particularly preferred because the synthesis can be readily performed. Since occurrence of olefin insertion to the $M^+$-halogen bond is less frequent than that to the $M^+$-carbon bond (or hydrogen bond), selection of a hydrocarbon group (preferably, a methyl group) or a halogen group (preferably, a chloro group) as the auxiliary ligand of the catalyst is preferred. Consequently, $R_5$ is particularly preferably a methyl group.

Furthermore, $R_5$ may be an organic group containing an ester bond having a carbonyl oxygen capable of coordinating to M. An example thereof is a group obtained from methyl butyrate.

The co-catalyst can be expressed as $Q^+L^-$. Q may be Ag, Li, Na, K, or H. Ag is preferred because halogen abstraction reaction is easily completed. Inexpensive Na and K are also preferred. L may be $BF_4$, $B(C_6F_5)_4$, $B(C_6H_3(CF_3)_2)_4$, $PF_6$, $AsF_6$, $SbF_6$, $(RfSO_2)_2CH$, $(RfSO_2)_3C$, $(RfSO_2)_2N$, or $RfSO_3$. In particular, $PF_6$, $AsF_6$, $SbF_6$, $(RfSO_2)_2CH$, $(RfSO_2)_3C$, $(RfSO_2)_2N$, and $RfSO_3$ are preferred since they tend to be stable toward polar compounds. Furthermore, in view of the simple synthesis and commercial availability, $PF_6$, $AsF_6$, and $SbF_6$ are particularly preferred. In view of high activity, $BF_4$, $B(C_6F_5)_4$, and $B(C_6H_3(CF_3)_2)_4$ are preferred, and in particular, $B(C_6F_5)_4$ and $B(C_6H_3(CF_3)_2)_4$ are preferred. Rf represents a hydrocarbon group having a plurality of fluorine groups. These fluorine groups are necessary in order to allow the anion to be non-coordinating, and preferably, the number of the fluorine groups is as large as possible. Examples of Rf include, but are not limited to, $CF_3$, $C_2F_5$, $C_4F_9$, $C_8F_{17}$, and $C_6F_5$. Some of these may be combined.

Because of the activation described above, the molar ratio of late transition metal complex catalyst/co-catalyst is 1/0.1 to 1/10, preferably 1/0.5 to 1/2, and particularly preferably 1/0.75 to 1/1.25.

As the olefin monomer in the present invention, any olefin that has a coordination-polymerizable carbon-carbon double bond can be used without particular limitations. Preferred examples thereof include olefins having 2 to 20 carbon atoms, such as ethylene, propylene, 1-butene, 1-hexene, 1-octene, 1-decene, 1-hexadecene, 1-eicosene, 4-methyl-1-pentene, 3-methyl-1-butene, vinylcyclohexane, cyclopentene, cyclohexene, cyclooctene, norbornene, and 5-phenyl-2-norbornene. Among these, α-olefins, in particular, α-olefins having 10 carbon atoms or less are preferred in view of high polymerization activity. Specific examples thereof include ethylene, propylene, 1-butene, 1-hexene, and 1-octene. These olefin monomers may be used alone or in combinations of two or more.

Furthermore, a small amount of diene, such as 1,3-butadiene, isoprene, 1,4-hexadiene, 3,5-dimethyl-1,5-hexadiene, 1,13-tetradecadiene, 1,5-cyclooctadiene, norbornadiene, 5-vinyl-2-norbornene, ethylidene norbornene, 5-phenyl-2-norbornene, dimethanooctahydronaphthalene, or dicyclopentadiene, may be combined.

The amount of the olefin monomer used is not particularly limited. Preferably, the molar ratio of olefin monomer/active species is 10 to $10^9$, more preferably 100 to $10^7$, and particularly preferably 1,000 to $10^5$. At an excessively small molar ratio, only a polymer with a small molecular weight is obtained. At an excessively large molar ratio, the yield of the polymer relative to the monomer tends to decrease. A method for producing a graft copolymer of the present invention will now be described.

The graft copolymer of the present invention can be produced under emulsion polymerization conditions or conditions similar to emulsion polymerization conditions. For example, the reaction may be conducted by homogeneously dispersing a coordination polymerization catalyst and an olefin monomer in a latex of a (meth)acrylic macromonomer. When the olefin monomer to be used is gaseous at the reaction temperature, the olefin monomer may be fed as a gas to the system, or the olefin monomer may be condensed or solidified at low temperature and then fed as a liquid or a solid to the system, followed by heating the system to the reaction temperature. All the (meth)acrylic macromonomer, the olefin monomer, and the coordination polymerization catalyst may be fed to the reactor at one time. Alternatively, after part of these materials is fed to the reactor, the remaining portion may be continuously or intermittently added to the system. These materials may be fed directly or may be emulsified with water and an emulsifier, and then the emulsion may be fed.

The ratio between the (meth)acrylic macromonomer and the olefin monomer used can be set freely. The olefin

monomer is preferably used in an amount of 1 to 100 parts by weight, and more preferably 2 to 33 parts by weight, relative to 100 parts by weight of the (meth)acrylic macromonomer used. When the olefin monomer is a volatile liquid with a boiling point of 100°C or lower or a gas, a largely excessive amount of the olefin monomer may be used, and the reaction may be terminated at the point where the monomer in the preferable amount is polymerized, followed by removal of the unreacted monomer.

During the polymerization, in order that the solubility of the olefin monomer and the coordination polymerization catalyst is improved to accelerate the reaction, a small amount of an organic solvent may be added. The solvent is not particularly limited, but is preferably an aliphatic or aromatic solvent, which may be halogenated. Examples of the solvent include toluene, ethylbenzene, xylene, chlorobenzene, dichlorobenzene, pentane, hexane, heptane, cyclohexane, methylcyclohexane, ethylcyclohexane, butyl chloride, methylene chloride, and chloroform. The solvent may be a polar solvent such as tetrahydrofuran, dioxane, diethyl ether, acetone, ethanol, methanol, methyl ethyl ketone, methyl isobutyl ketone, or ethyl acetate. Solvents which have low solubility with respect to water, which are relatively easily impregnated in the (meth)acrylic macromonomer used, and which easily dissolve catalysts are particularly preferred. Examples of such particularly preferred solvents include methylene chloride, chloroform, chlorobenzene, and butyl chloride.

These solvents may be used alone or in combination of two or more. The total amount of the solvent used is preferably 30% by volume or less, and more preferably 10% by volume or less, relative to the total volume of the reaction solution. Alternatively, the total amount of the solvent is preferably 150 parts by weight or less, and more preferably 50 parts by weight or less, relative to 100 parts by weight of the (meth)acrylic macromonomer used. If the amount used is excessively large, latex particles may be aggregated or new particles may be generated, resulting in inhomogeneous reaction.

The reaction temperature, pressure, and time in the production of the graft copolymer of the present invention may be selected freely depending on the boiling points of the starting materials used and the reaction rate. Although not particularly limited, from the standpoint that the production cost is reduced, the reaction temperature is preferably 0°C to 100°C, and more preferably 30°C to 95°C. The reaction pressure is preferably 0.05 to 10 MPa, and more preferably 0.1 to 2 MPa. The reaction time is preferably 10 minutes to 100 hours, and more preferably 0.5 to 50 hours. The temperature and the pressure may be kept constant from the initiation to the termination of the reaction or may be changed continuously or stepwise in the course of the reaction. When the olefin monomer used is a gas, the pressure can decrease gradually as the olefin monomer is consumed by polymerization reaction. In such a case, the reaction may be conducted while allowing the pressure to be changed. Alternatively, the reaction may be conducted while maintaining a constant pressure by supplying the olefin monomer according to the amount consumed or by heating.

There may be a case in which the graft copolymer contains free polyolefin that is not copolymerized with the (meth)acrylic macromonomer. Preferably, the graft copolymer does not substantially contain such free polyolefin, which can be achieved by adjusting various polymerization conditions. Free polyolefin can be decreased, for example, by a method in which the amount of the component (B) used in the (meth)acrylic macromonomer is increased so that the content of the coordination-polymerizable carbon-carbon double bond in the macromonomer is increased; a method in which macromonomer particles are formed so as to have a core-shell structure with the coordination-polymerizable carbon-carbon double bond being located on the surface layer; or a method in which a solvent is added during the polymerization of the olefin monomer so that macromonomer particles are easily impregnated with a catalyst solution.

The polyolefin graft copolymer according to the present invention is usually obtained as a latex. The particle size of the resulting latex depends on the particle size of the (meth)acrylic macromonomer used as a starting material and the amount of the reacted olefin monomer and is usually 30 to 1,000 nm, and preferably 50 to 500 nm. Depending on the reaction conditions, some of latex particles are aggregated and precipitated, or free polyolefin which is formed as a by-product is precipitated. The reaction is preferably conducted under conditions that do not produce such precipitates.

The latex thus obtained containing the polyolefin graft copolymer of the present invention can be used as an aqueous liquid composition. The latex may be used as it is, additives may be added to the latex, or the latex may be blended with another latex. Alternatively, the latex may be used after treatment such as dilution, concentration, heat treatment, or deaeration treatment. The latex may be applied onto a substrate composed of a plastic, a metal, wood, glass, or the like to be used as a coating agent, a paint, a surface treatment agent, or the like. Furthermore, the latex may be impregnated into a fiber, paper, a cloth, a carbon fiber, glass wool, or the like to be used as a modifier, a curing agent, or the like. The latex may also be used as a material for fiber-reinforced plastics or cast films.

A latex containing the polyolefin graft copolymer of the present invention may be dehydrated to isolate the solid component and the isolated solid component can be used for various applications. Examples of the method for dehydrating the latex include, but are not limited to, a method in which aggregation is performed by addition of an electrolyte, such as calcium chloride, magnesium chloride, calcium sulfate, magnesium sulfate, aluminum sulfate, or calcium formate; a method in which the solid component is aggregated by a mechanical operation, such as ultrasonic treatment, high-speed stirring, or centrifugal separation; a method in which moisture is removed by a drying operation, such as spray drying, heat drying; freeze drying, or reduced pressure drying. A washing operation with water and/or an organic solvent may

also be performed in any stage during a series of steps of isolating the polyolefin graft copolymer of the present invention from the latex. A dry product of the graft copolymer of the present invention may be pelletized with an extruder, a Banbury mixer, or the like. A water-containing (solvent-containing) resin obtained by precipitation and dehydration (removal of solvent) may be pelletized with a compressing dehydrator and the resulting pellets may be recovered.

The polyolefin graft copolymer of the present invention thus obtained is a copolymer of the (meth)acrylic macromonomer having high glass transition temperature, and therefore has good powder characteristics and excellent handleability.

By blending the polyolefin graft copolymer of the present invention with any of various thermoplastic resins, a thermoplastic resin composition of the present invention can be produced.

Preferred examples of the thermoplastic resin include resins that are commonly used, namely, polyolefins, such as polypropylene, polyethylene, ethylene propylene rubber, ethylene propylene diene rubber, ethylene octene rubber, polymethylpentene, ethylene-cyclic olefin copolymers, ethylene-vinyl acetate copolymers, ethylene-glycidyl methacrylate copolymers, and ethylene-methyl methacrylate copolymers; vinyl polymers, such as polyvinyl chloride, polystyrene, poly(methyl methacrylate), methyl methacrylate-styrene copolymers, styrene-acrylonitrile copolymers, styrene-acrylonitrile-N-phenylmaleimide copolymers, and $\alpha$-methylstyrene-acrylonitrile copolymers; and engineering plastics, such as polyesters, polycarbonates, polyamides, polyphenylene ether-polystyrene complexes, polyacetals, polyether ether ketones, and polyethersulfones. These thermoplastic resins may be used alone or in combination of two or more. Among these, polyolefins, such as polyethylene and polypropylene, are preferred from the standpoint that the dispersibility of the polyolefin graft copolymer of the present invention is high.

The blending ratio between the thermoplastic resin and the graft copolymer may be appropriately determined so that the resulting molded object has well-balanced physical properties. In order to achieve satisfactory physical properties, the amount of the graft copolymer is preferably 0.1 parts or more, and more preferably 5 parts or more, relative to 100 parts of the thermoplastic resin. In order to maintain the characteristics of the thermoplastic resin, the amount of the graft copolymer particles is preferably 500 parts or less, and more preferably 100 parts or less, relative to 100 parts of the thermoplastic resin.

Since the polyolefin graft copolymer of the present invention contains the polyolefin component, the copolymer exhibits high dispersibility even in resins having low polarity, such as polyethylene and polypropylene. Since the copolymer contains the (meth)acrylic component, various functions can also be imparted.

Furthermore, the composition containing the graft copolymer of the present invention may include general additives known in the plastic and rubber industry, for example, compounding agents, such as a plasticizer, a stabilizer, a lubricant, an ultraviolet absorber, an antioxidant, a flame retardant, a flame retardant assistant, a pigment, a glass fiber, a filler, and a polymer processing aid.

As the method for producing the composition containing the graft copolymer of the present invention, a method that is used for blending ordinary thermoplastic resins can be employed. For example, the composition can be produced by melt-kneading the thermoplastic resin, the graft copolymer of the present invention, and as required, additives using a heating kneader, such as a single-screw extruder, a twinscrew extruder, a roller mill, a Banbury mixer, a Brabender, a kneader, or a high-shear mixer. The order of kneading of the components is not particularly limited and may be determined according to the apparatus used, workability, or the physical properties of the resulting thermoplastic resin composition.

When the thermoplastic resin is produced by emulsion polymerization, the thermoplastic resin and the graft copolymer may be blended both in a latex form and the resultant mixture may then be coprecipitated (coaggregated), thus obtaining the thermoplastic resin composition.

Examples of the method for molding the composition containing the graft copolymer produced as described above include methods that are used for molding general thermoplastic resin compositions, such as injection molding, extrusion molding, blow molding, and calender molding.

(Examples)

The present invention will be described in more detail based on examples, but the present invention is not limited thereto.

In the following synthesis examples, examples, and comparative examples, the physical properties and characteristics were measured by the respective methods described below.

[Average particle size]

The particle size was measured by the dynamic light scattering method using a NICOMP Submicron Particle Sizer Model 370, and the volume average particle size was obtained.

[Gel content]

A sample in an amount of about 100 mg was placed in a 300 mesh net bag made of stainless steel and immersed in 100 mL of toluene at room temperature for 24 hours or more. Then, the sample was dried under reduced pressure at room temperature for 4 hours or more, and the weight of the toluene-insoluble component in the sample was measured. The gel content was determined according to the following expression:

$$\text{Gel content (\% by weight)} = \{(\text{toluene-insoluble dry weight})/(\text{weight before immersion in toluene})\} \times 100$$

[Polymerization conversion ratio]

The total weight of the monomers, emulsifier, and initiator fed in the emulsion polymerization for the (meth) acrylic macromonomer was divided by the weight of the entire reaction solution, and thus the maximum solid concentration in the case where 100% of the monomers was polymerized was obtained. About 0.5 to 2 g of a latex of the (meth)acrylic macromonomer obtained after the reaction was placed in an ointment can and dried by heating for 30 minutes or more in an oven at 100°C or higher. The ratio of the remaining solid was determined, and this ratio was considered as the solid concentration in the latex. The polymerization conversion ratio was calculated according to the following expression:

$$\text{Polymerization conversion ratio (\% by weight)} = \{(\text{solid concentration in latex})/(\text{maximum solid concentration})\} \times 100$$

[$^1$H NMR spectrum]

An aqueous solution of calcium chloride was added to a graft copolymer latex to perform salting-out, followed by water washing and drying. The resulting resin in an amount of about 10 mg was dissolved in about 1 mL of deuterated chloroform (commercially available reagent), and measurement was performed with a 300 MHz NMR apparatus (Varian Gemini 300).

[Powder characteristics]

An aqueous solution of calcium chloride was added to a (meth)acrylic macromonomer latex or a graft copolymer latex to perform salting-out to obtain a solid component. The solid component was washed with water and dried. With respect to powder characteristics of the resulting resin, an abbreviated evaluation was conducted. Using a SUS304 spatula including a spatula portion with a width of 10 mm and a thickness of 0.5 mm, powder of the resin was crushed with a force of $2 \pm 0.5$ kg/cm$^2$, and the change in the shape of particles was visually observed. When mutual blocking of particles of the powder occurred to form masses that had a larger particle size than that of the original particles, powder characteristics were evaluated as poor. When mutual blocking of particles of the powder did not occur and the original particle size was maintained or when the particles of the powder were disintegrated to particles having a smaller particle size than that of the original particles, powder characteristics were evaluated as good.

[Tensile properties/oil resistance]

A polypropylene or a resin composition of the present invention was formed into a pressed sheet with a thickness of about 0.7 mm, and a No. 2(1/3) test piece was punched out therefrom. Using an autograph (AUTOGRAPH AG-2000A manufactured by Shimadzu Corp.), tensile testing was performed according to JIS-K7113 at a tensile testing speed of 16.66 mm/min, and the maximum stress (tensile strength) and the maximum elongation were measured. In the composition having low dispersibility in resins, cracking easily occur from the interface between the polypropylene and the resin to cause cutting. Therefore, the maximum elongation was considered as an index of dispersibility. Furthermore, another No. 2(1/3) test piece was punched out from the same pressed sheet and immersed in IRM 903 oil (manufactured by Japan Sun Oil Company) at 100°C for 24 hours to perform oil resistance testing according to JIS-K6258. The tensile properties after the oil resistance testing were measured in the same manner as in before the testing, and the rate of

change in tensile strength was considered as the index of oil resistance.

[Wettability]

Using a pressed sheet with a thickness of about 0.7 mm of a polypropylene or a resin composition of the present invention, surface tension was measured according to JIS-K6768. Measurement was performed at 6 points of one test piece, and the average value was used as the index of wettability.

[Abrasion resistance]

The surface of a pressed sheet with a thickness of about 0.7 mm of a polypropylene or a resin composition of the present invention was slightly rubbed with two paper towels (Scott towel manufactured by Crecia and Kim Wipe manufactured by Crecia) having different hardnesses, and presence or absence of abrasions was visually determined. The case in which abrasions were caused by the Scott towel was evaluated as poor; the case in which abrasions were not caused by the Scott towel but were caused by the Kim Wipe was evaluated as average; and the case in which abrasions were not caused by either the Scott towel or the Kim Wipe was evaluated as good.

(Synthesis Examples 1 to 8) (Meth)acrylic macromonomer

To a 200-mL glass four-necked flask equipped with a stirrer, a thermometer, and a reflux condenser, water and a (meth)acrylic monomer were fed, and the mixture was bubbled with nitrogen. Then, an emulsifier was added thereto, and stirring was performed to emulsify the mixture. The resulting emulsion was heated to 70°C under a nitrogen stream. An initiator was added thereto, and reaction was performed for 3 hours. The reaction solution was left to cool to room temperature, and thereby a latex of a (meth)acrylic macromonomer was obtained. Table 1 shows the amounts of the individual components used and the physical properties of the resulting latex.

(Comparative Example 1) Low Tg macromonomer

Reaction was performed as in Synthesis Examples 1 to 8 except that n-butyl acrylate was used as the (meth) acrylic monomer. Table 1 shows the amounts of the individual components used and the physical properties of the resulting latex. All the macromonomers having a glass transition temperature of 30°C or higher obtained in Synthesis Examples 1 to 8 had good powder characteristics, while the macromonomer in Comparative Example 1 had poor powder characteristics.

TABLE 1

| Synthesis Example | Water /g | Monomer Component (A) /g | | Monomer Component (B) /g | | Emulsifier (SDS)/g | Initiator (APS)/g | Tg /°C | Polymerization conversion ratio | Average particle size | Gel content | Powder characteristics |
|---|---|---|---|---|---|---|---|---|---|---|---|---|
| Synthesis Example 1 | 70.8 | TBA | 16 | AIMA | 0.32 | 0.28 | 0.032 | 43 | 93% | 82nm | 2% | Good |
| Synthesis Example 2 | 70 | GMA | 17 | EGDEM | 0.80 | 0.28 | 0.032 | 63 | 94% | 84nm | 106% | Good |
| Synthesis Example 3 | 70 | GMA | 17 | EGDEM | 0.80 | 0.07 | 0.032 | | 106% | 125nm | 99% | Good |
| Synthesis Example 4 | 70 | MMA | 16 | EGDEM | 0.84 | 1.8 | 0.032 | 105 | 99% | 32nm | 20% | Good |
| Synthesis Example 5 | 70 | MMA | 16 | EGDEM | 0.84 | 0.07 | 0.016 | | 96% | 99nm | 18% | Good |
| Synthesis Example 6 | 70 | MMA90wt% HEMA10wt% | 16 | EGDEM | 0.84 | 0.07 | 0.016 | 103 | 96% | 89nm | 113% | Good |
| Synthesis Example 7 | 70 | MMA70wt% HEMA30wt% | 16 | EGDEM | 0.84 | 0.07 | 0.032 | 99 | 98% | 105nm | 100% | Good |
| Synthesis Example 8 | 70 | MMA50wt% HEMA50wt% | 16 | EGDEM | 0.80 | 0.07 | 0.032 | 95 | 96% | 208nm | 100% | Good |
| Comparative Example 1 | 70 | BA | 16 | AIMA | 0.32 | 1.8 | 0.016 | -54 | 100% | 137nm | 1% | Poor |

BA: n-butyl acrylate AIMA: allyl methacrylate
TBA: tert-butyl acrylate EGDEM: ethylene glycol dicyclopentenyl ether methacrylate
GMA: glycidyl methacrylate SDS: sodium dodecyl sulfate
MMA: methyl methacrylate APS: ammonium persulfate
HEMA: 2-hydroxyethyl methacrylate

(Comparative Example 2) Ethylene homopolymerization

A palladium complex (hereinafter also referred to as [N^N]PdMeCl) having a structure represented by chemical formula (3):

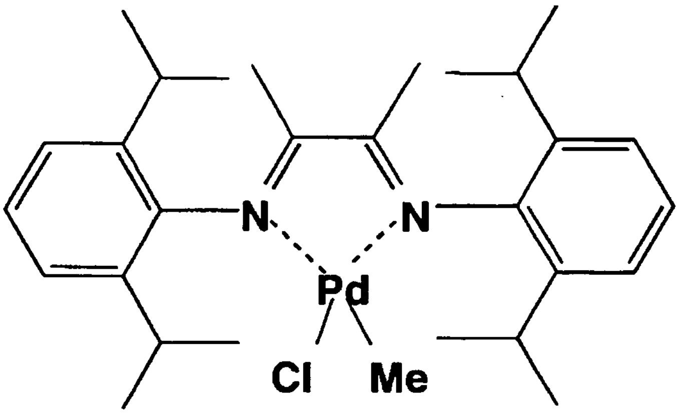

(3)

was synthesized by a known method described in Journal of the American Chemical Society (J. Am. Chem. Soc.) 1995, Vol. 117, p. 6414, or other documents. An 80 mmol/L diethyl ether solution (8 mL) of [N^N]PdMeCl and an 80 mmol/L diethyl ether solution (8 mL) of $LiB(C_6F_5)_4$ were mixed to precipitate LiCl. Thereby, a 40 mmol/L diethyl ether solution (16 mL) of $[N^N]PdMe^+{\cdot}B(C_6F_5)_4^-$ complex was prepared.

The catalyst/diethyl ether solution (2 mL) was placed in a pressure vessel purged with nitrogen, and diethyl ether was removed under reduced pressure at room temperature. Then, 0.5 mL of methylene chloride was added to dissolve the catalyst. After adding a 0.4% aqueous solution of sodium dodecyl sulfate (25 mL), stirring was performed to disperse the catalyst. Ethylene was introduced thereto and the pressure was controlled to 2 MPa. Reaction was performed at room temperature for 30 hours. The resulting product was a mixture of a precipitate and a latex. $^1H$ NMR analysis confirmed that each of them was a branched polyethylene. The latex component was subjected to salting-out with an aqueous solution of calcium chloride, followed by post-treatment, i.e., filtration, water washing, and drying, to obtain a polyolefin resin. Each of the resulting precipitate and the product obtained by salting-out of the latex had a gel content of 0.5% or less. When 100 mg of the product obtained by salting-out of the latex was immersed in 100 mL of hexane at room temperature for 24 hours, the product was completely dissolved.

(Examples 1 to 8) Copolymer of (meth)acrylic macromonomer and ethylene

A 40 mmol/L diethyl ether solution (15 mL) of $[N^N]PdMe^+{\cdot}B(C_6F_5)_4^-$ complex was placed in a Schlenk flask and diethyl ether was removed by reducing the pressure at room temperature. Subsequently, 15 mL of methylene chloride was added to dissolve the complex to prepare a 40 mmol/L methylene chloride solution of $[N^N]PdMe^+{\cdot}B(C_6F_5)_4^-$ complex. The catalyst/methylene chloride solution (0.5 mL) was, directly or after dispersed in a 10 wt% SDS aqueous solution (5 mL), mixed with 25 mL of each of the latexes obtained in Synthesis Examples 1 to 8, and ultrasonic treatment was performed for 5 minutes to disperse the catalyst homogeneously. The reaction mixture was fed in a pressure vessel purged with nitrogen. Ethylene was introduced thereto and the pressure was controlled to 2 MPa. After reaction was performed at room temperature for 7 hours, the pressure was released and the unreacted ethylene was removed. The resulting product was a mixture of a precipitate and a latex. The latex component was subjected to salting-out with an aqueous solution of calcium chloride, followed by post-treatment, i.e., filtration, water washing, and drying, to obtain a polyolefin graft copolymer of the present invention. The ethylene homopolymer (Comparative Example 2) had poor powder characteristics, while all the copolymers obtained in Synthesis Examples 1 to 8 had good powder characteristics. Table 2 shows the reaction conditions and the yields and physical properties of the products.

When 100 mg of each of the products obtained by salting-out of the latexes was immersed in 100 mL of hexane at room temperature for 24 hours, insolubles remained. $^1H$ NMR analysis confirmed that these insolubles contained both the macromonomer component and the polyethylene component. Since free polyethylene dissolves in hexane, the insolubles correspond to (meth)acrylic macromonomer-ethylene copolymers.

(Comparative Example 3) Copolymer of low Tg (meth)acrylic macromonomer and ethylene

Reaction was performed as in Examples 1 to 8 except that 25 mL of the latex of poly(butyl acrylate) macromonomer of Comparative Example 1 was used instead of the macromonomers of Synthesis Examples 1 to 8. The latex component of the resulting product was subjected to salting-out, filtration, water washing, and drying to obtain a polyolefin graft copolymer resin. Table 2 shows the reaction conditions and the yields and physical properties of the product. $^1$H NMR analysis of the hexane-insoluble component confirmed the production of a (meth)acrylic macromonomer-ethylene copolymer. However, powder characteristics were poor.

TABLE 2

| | Starting material latex | | | Catalyst solution | | Precipitated resin | Latex | | | Presence or absence of copolymer | Powder characteristics |
|---|---|---|---|---|---|---|---|---|---|---|---|
| | Starting material | | Feed amount | Feed amount | Feed method | Yield | Yield of product obtained by salting-out | Average particle size | Gel content | | |
| Example 1 | PTBA | Synthesis Example 1 | 25mL | 20μmol | Emulsified | 0.32g | 4.83g | 75nm | 39% | Present | Good |
| Example 2 | PGMA | Synthesis Example 2 | 25mL | 20μmol | Emulsified | 0.27g | 5.54g | 81 nm | 83% | Present | Good |
| Example 3 | PGMA | Synthesis Example 3 | 25mL | 20μmol | Emulsified | 0.62g | 5.95g | 126nm | 86% | Present | Good |
| Example 4 | PMMA | Synthesis Example 4 | 25mL | 20μmol | Direct | 1.18g | 4.90g | 42nm | 1% | Present | Good |
| Example 5 | PMMA | Synthesis Example 5 | 25mL | 20μmol | Emulsified | 0.94g | 5.96g | 108nm | 3% | Present | Good |
| Example 6 | P ($MMA^{90}$/ $HEMA^{10}$) | Synthesis Example 6 | 25mL | 20μmol | Direct | 1.37g | 4.79g | 99nm | 108% | Present | Good |
| Example 7 | P ($MMA^{70}$/ $HEMA^{30}$) | Synthesis Example 7 | 25mL | 20μmol | Direct | 0.49g | 8.10g | 102nm | 76% | Present | Good |
| Example 8 | P ($MMA^{50}$/ $HEMA^{50}$) | Synthesis Example 8 | 25mL | 20μmol | Emulsified | 0.52g | 6.06g | 235nm | 90% | Present | Good |
| Comparative Example 2 | (water 25mL) | | 25mL | 80μmol | Direct | 9.68g | 3.10g | | 0% | Absent | Poor |

Table continued

| | Starting material latex | | | Catalyst solution | | Precipitated resin | Latex | | | Presence or absence of copolymer | Powder characteristics |
|---|---|---|---|---|---|---|---|---|---|---|---|
| | Starting material | | Feed amount | Feed amount | Feed method | Yield | Yield of product obtained by salting-out | Average particle size | Gel content | | |
| Comparative Example 3 | PBA | Comparative Example 1 | 25mL | 20μmo | Direct | 2.06g | 3.08g | 135nm | 1% | Present | Poor |

*Feed method
Direct: Catalyst solution was added, without being emulsified, directly to reaction solution.
Emulsified: Catalyst solution was dispersed in 10wt% SDS aqueous solution (5mL) and fed as emulsion.

*Presence or absence of copolymer
After 100 mg of product obtained by salting-out of latex was immersed in hexane, it was confirmed if resulting insoluble contained copolymer by $^{1}H$ NMR analysis.
Present: Polyethylene component that was copolymerized and became insoluble in hexane was present.
Absent: Polyethylene copolymer component insoluble in hexane was not present.

(Comparative Example 4) Formation of pressed sheet of

PP alone

Using a laboplastomill (manufactured by Toyo Seiki, capacity: 30 cc), 20 g of a polypropylene resin (F232DC manufactured by Grand Polymer) was kneaded at 200°C and 100 rpm for 10 minutes, and then a sheet with a thickness of about 0.7 mm was formed by pressing (pressing conditions: 200°C, zero pressure, 10 min → 200°C, 50 kgf/cm$^2$, 10 min → room temperature, 50 kgf/cm$^2$, 5 min). The tensile properties, oil resistance, wettability, and abrasion resistance of the resulting sheet were measured. The results thereof are shown in Table 3.

(Comparative Example 5) PP/(meth)acrylic macromonomer composition

Using a laboplastomill (manufactured by Toyo Seiki, capacity: 30 cc), 4 g of the product obtained by salting-out of the latex of the (meth)acrylic macromonomer of Synthesis Example 4 and 20 g of a polypropylene resin (F232DC manufactured by Grand Polymer) were kneaded at 200°C and 100 rpm for 10 minutes, and then a sheet with a thickness of about 0.7 mm was formed by pressing (pressing conditions: 200°C, zero pressure, 10 min → 200°C, 50 kgf/cm$^2$, 10 min → room temperature, 50 kgf/cm$^2$, 5 min). The oil resistance, wettability, and abrasion resistance of the resulting sheet were measured. The results thereof are shown in Table 3.

(Examples 9 and 10) PP/polyolefin graft copolymer composition

Using a micro rheology compounder (minilab manufactured by ThermoHaake), 20 parts of the polyolefin graft copolymer of the present invention obtained in Example 4 or 6 and 100 parts of a polypropylene resin (F232DC) were kneaded at 200°C for 10 minutes to prepare a thermoplastic resin composition of the present invention. A sheet with a thickness of about 0.7 mm was formed by pressing (pressing conditions: 200°C, zero pressure, 10 min → 200°C, 50 kgf/cm$^2$, 10 min → room temperature, 50 kgf/cm$^2$, 5 min). The tensile properties, oil resistance, wettability, and abrasion resistance of the resulting sheet were measured. The results thereof are shown in Table 3. With respect to the compositions of the present invention, the rate of change in maximum stress after oil resistance testing was lower than that of Comparative Example 4, thus exhibiting excellent oil resistance. Furthermore, the compositions of the present invention had high wettability and excellent abrasion resistance.

TABLE 3

| | Composition | | | Tensile properties | | | | Wettability | Abrasion resistance |
|---|---|---|---|---|---|---|---|---|---|
| | PP | Substance added | | Maximum stress | | Rate of change in maximum stress | Maximum elongation (%) | Surface tension (μN/cm) | |
| | (part by weight) | Component | (part by weight) | Untreated | After oil resistance testing | | | | |
| Example 9 | 100 | Copolymer of Example 4 | 20 | 25.9 | 13.7 | -47.1% | 573.9 | 310 | Good |
| Example 10 | 100 | Copolymer of Example 6 | 20 | 23.1 | 12.3 | -46.8% | 564.1 | 310 | Good |
| Comparative Example 4 | 100 | None | 0 | 37.8 | 18.5 | -51.1% | 755.6 | 300 or less | Average |
| Comparative Example 5 | 100 | Macromonomer of Synthesis Example 4 | 20 | 14.5 | 8.0 | -44.8% | 8.5 | 310 | Good |

(Example 11) Copolymer of (meth)acrylic macromonomer and 1-hexene

To a 100-mL eggplant-shaped flask equipped with a stirrer and a nitrogen line, 25 mL of the latex obtained in Synthesis Example 5 and 500 mg of sodium dodecyl sulfate were placed, and the mixture was bubbled with nitrogen. Then, a 40 mmol/L catalyst/methylene chloride solution (0.5 mL) was added thereto, and the mixture was stirred under a nitrogen stream to achieve homogeneous dispersion. 1-Hexene (3 mL) was added thereto and reaction was performed at room temperature and 1 atm for 7 hours. No resin masses were precipitated, and the product obtained was all in a latex state. The average particle size of the latex was about 110 nm. The resulting latex was subjected to salting-out with an aqueous solution of calcium chloride, followed by post-treatment, i.e., filtration, water washing, devolatilization of unreacted monomers, and drying, to obtain 6.00 g of a polyolefin graft copolymer resin of the present invention.

$^1$H NMR analysis confirmed that the product was a (meth)acrylic macromonomer-hexene copolymer. The gel content was 12%.

Industrial Applicability

The polyolefin graft copolymers and compositions thereof according to the present invention exhibit physical properties representing polarity or physical properties exhibited as a result of polarity, such as low contact angle, high surface tension, wettability, adhesiveness, paintability, dyeability, high dielectric constant, and high-frequency sealing properties. Consequently, the polyolefin graft copolymers and compositions thereof can be used for polarity-imparting agents (adhesiveness, paintability, dyeability, high-frequency sealing properties, etc.) for thermoplastic resins, in particular, for polyolefins, adhesives, primers, coating materials, paint, compatibilizers for polymer alloys, surfactants for polyolefin-filler composite materials and polyolefin nanocomposites, and for other applications.

## Claims

1. A polyolefin graft copolymer produced, in the presence of a coordination polymerization catalyst, by copolymerizing an olefin monomer and a (meth)acrylic macromonomer which has a glass transition temperature of 30°C or higher.

2. The polyolefin graft copolymer according to Claim 1, wherein the coordination polymerization catalyst is a complex containing a ligand having two imine nitrogen atoms and a late transition metal selected from Groups 8 to 10 in the periodic table.

3. The polyolefin graft copolymer according to Claim 2, wherein the coordination polymerization catalyst is a complex containing an α-diimine ligand and a late transition metal selected from Group 10 in the periodic table.

4. The polyolefin graft copolymer according to Claim 3, wherein the coordination polymerization catalyst after reaction with a co-catalyst is an active species represented by general formula (1) or (2):

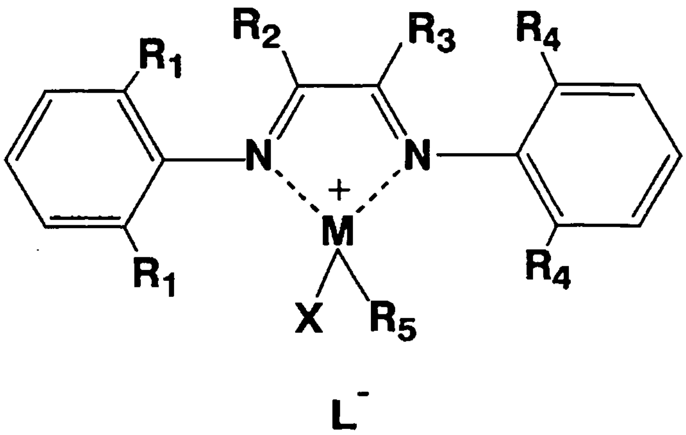

(1)

(wherein M represents palladium or nickel; $R_1$ and $R_4$ each independently represent a hydrocarbon group having

1 to 4 carbon atoms; $R_2$ and $R_3$ each independently represent a hydrogen atom or a methyl group; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and $L^-$ represents an anion);

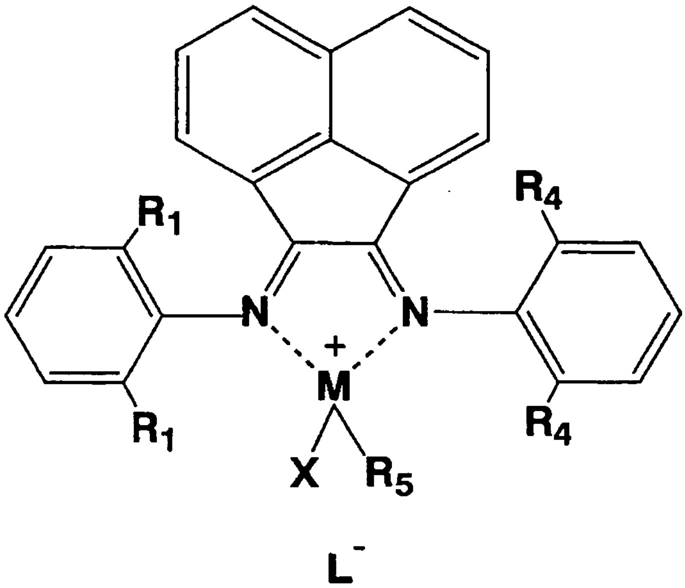

(2)

(wherein M represents palladium or nickel; $R_1$ and $R_4$ each independently represent a hydrocarbon group having 1 to 4 carbon atoms; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and L- represents an anion).

5. The polyolefin graft copolymer according to any one of Claims 1 to 4, wherein the (meth)acrylic macromonomer is a poly(meth)acrylic macromonomer including a (meth)acrylic monomer (A) and a monomer (B) copolymerizable with the olefin monomer.

6. The polyolefin graft copolymer according to Claim 5, wherein the component (A) is at least one monomer selected from the group consisting of methyl methacrylate, glycidyl methacrylate, 2-hydroxyethyl methacrylate, tert-butyl acrylate, and tert-butyl methacrylate, and the component (B) is allyl methacrylate and/or ethylene glycol dicyclopentenyl ether methacrylate.

7. The polyolefin graft copolymer according to any one of Claims 1 to 6, wherein the olefin monomer is an $\alpha$-olefin.

8. The polyolefin graft copolymer according to Claim 7, wherein the $\alpha$-olefin is at least one monomer selected from the group consisting of ethylene, propylene, 1-butene, 1-hexene, and 1-octene.

9. A method for producing the polyolefin graft copolymer according to any one of Claims 1 to 8.

10. An aqueous liquid composition containing the polyolefin graft copolymer according to any one of Claims 1 to 8.

11. A thermoplastic resin composition containing the polyolefin graft copolymer according to any one of Claims 1 to 8.

12. The thermoplastic resin composition according to Claim 11, wherein the composition contains a polyolefin resin as a component.

**INTERNATIONAL SEARCH REPORT**

International application No.
PCT/JP2004/011744

A. CLASSIFICATION OF SUBJECT MATTER
Int.Cl$^7$ C08F290/04, C08F4/70

According to International Patent Classification (IPC) or to both national classification and IPC

B. FIELDS SEARCHED
Minimum documentation searched (classification system followed by classification symbols)
Int.Cl$^7$ C08F290/00-290/04, C08F4/70

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-147032 A (Kaneka Corp.), 21 May, 2003 (21.05.03), Claims; examples & WO 03/20779 A1 | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 November, 2004 (08.11.04) | 30 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)